# EUROPEAN PATENT SPECIFICATION

(11) **EP 2 621 006 B1**
(45) Date of publication and mention of the grant of the patent: **26.10.2016**
(21) Application number: 12152766.7
(22) Date of filing: 26.01.2012
(51) Int. Cl.: H01M 8/1226, H01M 4/88, H01M 4/86, H01M 4/90, H01M 8/124

(54) **An anode on a pretreated substrate for improving redox-stablility of solid oxide fuel cell and the fabrication method thereof**
Anode auf einem vorbehandelten Substrat zur Verbesserung der Redoxstabilität einer Festoxidbrennstoffzelle und Herstellungsverfahren dafür
Anode sur un substrat prétraité pour améliorer la stabilité redox d'une pile à combustible à oxyde solide et son procédé de fabrication

(43) Date of publication of application: 31.07.2013
(73) Proprietor: Institute of Nuclear Energy Research Atomic Energy Council, Longtan Township, Taoyuan County (TW)
(72) Inventor: Hwang, Chang-Sing, 325 Taoyuan County (TW); Tsai, Chun-Huang, 325 Taoyuan County (TW); Yu, Jen-Feng, 43545 Taichung City (TW); Chang, Chun-Liang, 64042 Yunlin County (TW); Lin, Jun-Meng, 10458 Taipei City (TW); Cheng, Shih-Wei, 22162 New Taipei City (TW)
(74) Representative: Lang, Christian

(56) References cited:
- EP-A1- 1 939 967
- WO-A1-2007/067242
- US-A1- 2010 098 996
- US-A1- 2011 003 235

## Description

### TECHNICAL FIELD

The present disclosure relates to a method for fabricating an anode structure on a pretreated porous metal supporting substrate for improving the redox stability of a solid oxide fuel cell (SOFC), and more particularly, to a SOFC anode with two anode layers coated on a specially prepared porous metal substrate by using a high-voltage high-enthalpy Ar-He-H₂-N₂ atmospheric-pressure plasma spraying process.

### TECHNICAL BACKGROUND

Recently the solid oxide fuel cell (SOFC) has been a promising means of converting chemical energy into electrical energy by an electro-chemical mechanism. Usually in the conventional SOFC, the Yttria Stabilized Zirconia (YSZ) is used as the electrolyte, the cermet composed of nickel (Ni) and YSZ is used as the anode, and the perovskite composed of LaMnO₃ is used as the cathode.

When the SOFC works in a high-temperature environment, the anode fuel, H₂, may somehow be suddenly interrupted, such that the air may get into the anode of the fuel cell. Since Ni, the metal catalyst for fuels will be oxidized and have its volume increased and its expansion coefficient changed, the anode of the SOFC tends to be broken into pieces.

Consequently, Ld_{0.75}Sr_{0.25}Cr_{0.5}Mn_{0.5}O₃ (LSCM) has been proposed as another option for the anode material of the SOFC, in which hydrogen (H₂) or methane (CH₄) can be utilized as the fuel and the redox stability of anode can be improved. However, the catalytic conversion efficiency of LSCM is less than that of Ni, and also LSCM is not a good conductor for oxygen (O) ions. Various anode materials have been developed for the SOFC, such as an anode composed of mixed LSCM and YSZ (LSCM-YSZ) or mixed LSCM and Gd-doped ceria (LSCM-GDC). Furthermore, some metal catalyst, such as palladium (Pd), rhodium (Rh), copper (Cu) or Ni, can be doped into this kind of LSCM-YSZ or LSCM-GDC anode to improve the catalytic ability of the anode. In a prior art disclosed in U.S. Pat. No. 7,504,172, a slurry layer is screen-printed on the YSZ electrolyte layer to form a LSCM anode. Also a layer of Ce_{0.8}Gd_{0.2}O₂ (GDC) is added between the YSZ electrolyte layer and the LSCM anode to decrease polarization resistance of the anode. It is in need that the polarization resistances of above mentioned anodes are further reduced with improving the anode redox stabilities of SOFC cells.

Moreover, to increase the anode redox stability of a solid oxide fuel cell, it is disclosed that another nickel oxide (NiO) acting as oxidation barrier layer (Journal of The Electrochemical Society, 153(10), A1929, 2006) is coated on the supporting substrate. The NiO particle in this layer has a size less than the NiO particles in the anode, and is to be reduced to a porous Ni layer when the full cell is in the normal operation conditions. This porous fine Ni layer tends to be re-oxidized (or absorbs the leakage oxygen) more easily, so as to absorb abnormal leak oxygen to improve redox stability of the anode of a solid oxide fuel cell. However, the permeability of fuel gas decreases accordingly.

US 2011/003235 A1 describes a solid oxide fuel cell. The solid oxide fuel cell comprises a metal frame, a porous metal substrate, a first anode isolation layer, an anode interlayer, a second anode isolation layer, an electrolyte layer, a cathode isolation layer, a cathode interlayer and a cathode current collecting layer. A porous metal substrate preliminary treatment process is performed, including an acid pickling process on the porous metal substrate, a surface powdering process, a hot pressing process, an acid etching process and a low-temperature surface oxidation process.

US 2010/098996 A1 discloses a solid oxide fuel cell comprising a metal frame, a pre-treated porous metal substrate, an anode layer, an electrolyte layer, a cathode interlayer and a cathode current collecting layer. A preliminary treatment process is performed to obtain the pre-treated porous metal substrate. In the process, first a porous metal substrate is provided and then a flattening process, a surface powder pasting process, a high temperature and high pressure sintering process and a surface oxidation process are performed in order on the porous metal substrate.

### TECHNICAL SUMMARY

It is one object of the present invention to improve the redox ability of the anode of a solid oxide fuel cell.

It is another object of the present invention to minimize the anode polarization resistance of a solid oxide fuel cell and to improve efficiency of energy conversion from chemical energy of hydrogen to electrical energy.

These objects are solved by the features of the independent claim 1. advantageous embodiments are subject matter of the dependent claims.

According to one aspect of the present invention, one embodiment provides an anode for improving the redox stability of an SOFC, the anode preferably comprising:
a porous metal substrate of high gas permeability; a first porous anode functional layer, formed on the porous metal substrate by a high-voltage high-enthalpy Ar-He-H₂-N₂ atmospheric-pressure plasma spraying process; and a second porous anode functional layer, formed on the first porous anode functional layer by a high-voltage high-enthalpy Ar-He-H₂-N₂ atmospheric-pressure plasma spraying and hydrogen reduction. For example, the material of the first porous anode layer is composed of LSCM, or Sr_{0.86}Y_{0.08}TiO₃, or La_{0.33}Sr_{0.66}TiO₃ perovskite, and the material of the second porous anode layer after hydrogen reduction is composed of an LDC-Ni cermet mixture, or an LDC-Cu cermet mixture, or a GDC-Ni cermet mixture, or a GDC-Cu cermet mixture, or an LDC-Ni-Cu cermet mixture, or a GDC-Ni-Cu cermet mixture. The combination of the high gas-permeable porous metal supporting substrate, the first porous anode layer, the second porous anode layer promotes the anode function significantly.

According to another aspect of the present invention, another embodiment provides a method for fabricating an anode on a pretreated substrate for improving the redox stability of an SOFC, the method preferably comprising the steps of: providing a porous metal substrate, a first powder of redox stable perovskite material, and a second powder of oxide mixture capable of conducting both electron and oxygen ion after converted to a cermet mixture by hydrogen reduction; sieving the first and second powders into groups according to the sizes thereof; applying a pre-treatment process to the porous metal substrate to improve the gas-permeable porosity and mechanic strength thereof; forming a first anode functional layer of the first powder on the pre-treated porous metal substrate by using a high-voltage high-enthalpy Ar-He-H₂-N₂ atmospheric-pressure plasma spraying; and forming a second anode functional layer of the second powder on the first anode functional layer by a high-voltage high-enthalpy Ar-He-H₂-N₂ atmospheric-pressure plasma spraying and hydrogen reduction. The pre-treatment process to form a high gas permeable porous metal substrate may comprise the steps of: eroding the porous metal substrate in an acid; impregnating the porous metal substrate with an Fe-contained material by a vacuum means, and then sintering the porous metal substrate in a high-temperature reduced or vacuum atmosphere, until the amount of Fe in the porous metal substrate reaches about 6 wt% to 15 wt%; forming a first porous surface layer of nickel powder on the porous metal substrate and a second porous surface layer of nickel-YSZ powder on the first porous surface layer; sintering the porous metal substrate in a high-temperature reduced or vacuum atmosphere, until gas-permeability of the porous metal substrate is 1.974 x 10⁻¹² to 4.935 x 10⁻¹² m² (2 to 5 Darcy) and the size of the surface holes on the porous metal substrate is less than 50 µm ; and oxidizing surface of the porous metal substrate so as to reduce the sizes of surface pores further to less than 30 µm.

Further scope of applicability of the present application will become more apparent from the detailed description given hereinafter.

### BRIEF DESCRIPTION OF THE DRAWINGS

The present disclosure will become more fully understood from the detailed description given herein below and the accompanying drawings which are given by way of illustration only, and thus are not limitative of the present disclosure and wherein:
FIG. 1A is a schematic diagram showing the architecture of a double-layer anode on a pretreated porous metal supporting substrate for a SOFC according to an embodiment of the present disclosure.
FIG. 1B is a schematic diagram of a pretreated porous metal supporting substrate.
FIG. 2A is a flowchart of a fabricating method of the double-layer anode on a pretreated porous metal supporting substrate, according to another embodiment of the present disclosure.
FIG. 2B is a flowchart of the pre-treatment process for forming a porous metal supporting substrate in the embodiment.
FIG. 2C is a schematic architecture of the high-voltage high-enthalpy Ar-He-H₂-N₂ atmospheric-pressure plasma spraying and the powder-injected plasma jet techniques.
FIG. 3 illustrates the redox stability of the double-layer anode of the tested cell.
FIG. 4 shows the measured anode polarization impedances versus temperatures by AC impedance spectroscopy.

### DESCRIPTION OF THE EXEMPLARY EMBODIMENTS

For further understanding and recognizing the fulfilled functions and structural characteristics of the disclosure, several exemplary embodiments cooperating with detailed description are presented as the following.

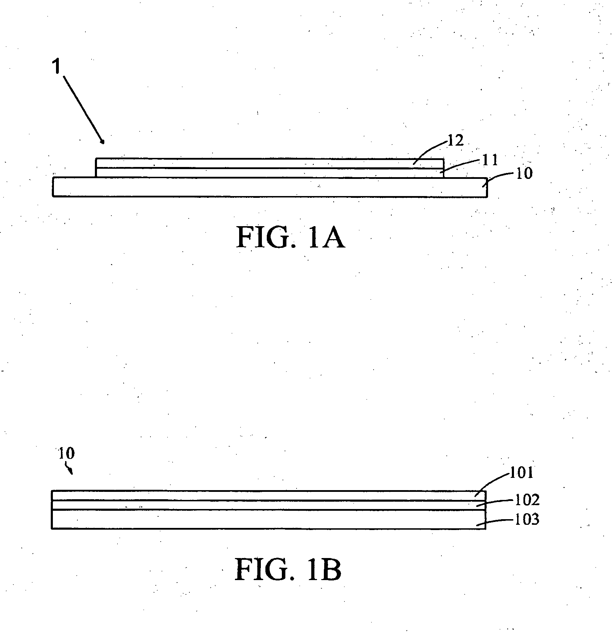

Please refer to FIG. 1A, which is a schematic diagram showing the architecture of a double-layer anode on a porous metal supporting substrate for a SOFC according to an embodiment of the present disclosure. The double-layer anode structure 1 after hydrogen reduction is composed of a supporting substrate 10, a first porous anode layer 11, and a second porous anode layer 12. The supporting substrate 10 is a pretreated porous metal substrate of high gas permeability. As shown in FIG. 1B, the supporting substrate 10 is composed of a first porous surface film 101, a second porous surface film 102, and a porous metal plate 103.

After hydrogen reduction, the porous metal plate 103 is mainly composed of Ni and Fe, the first porous surface film 101 is mainly composed of Ni particles and the second porous surface film 102 is mainly composed of mixed Ni and YSZ particles. The first porous anode layer 11 is coated on the supporting substrate 10 and is composed of a perovskite structure material capable of conducting electrons mainly. In the embodiment, La_{0.75}Sr_{0.25}Cr_{0.5}Mn_{0.5}O₃ (LSCM) is used as the perovskite material wherein Cr:Mn = 0.5:0.5, but is not limited thereby, which can be 0.4:0.6, 0.6:0.4, or the other ratio value, or Sr_{0.86}Y_{0.08}TiO₃ or La_{0.33}Sr_{0.66}TiO₃. The sizes of the perovskite powders are about 400 nm to 10 µm. Regarding the first porous anode layer 11, the thickness thereof is about 10 µm to 30 µm, most of the pores therein have sizes of less than 30 µm, and the porosity is about 15 % to 30 %.

The second porous anode layer 12 is coated on the first porous anode layer 11 and the anode layer 12 after hydrogen is a cermet material capable of conducting both electrons and oxygen ions. The powders used to form this cermet anode layer can be submicron or nano powders. In the embodiment, the powders of La-doped ceria (LDC) and NiO mixture (LDC-NiO) are applied to form a layer and after hydrogen reduction the LDC-Ni cermet anode layer 12 is formed, wherein the volume ratio of LDC to Ni can be as large as 1:1, but is not limited thereby, and the particle size of the LDC or Ni is less than 100 nm. Regarding the formed second porous anode layer 12, the thickness thereof is about 10 to 30 µm, the average pore size is less than 100 nm so as to increase the three-phase-boundary (TPB) quantity, and the porosity is about 12 to 30 %. Also, the cermet composite material can be LDC-Ni cermet mixture, LDC-Cu cermet mixture, Gd-doped ceria (GDC)-Ni cermet mixture, GDC-Cu cermet mixture, LDC-Ni-Cu cermet mixture, or GDC-Ni-Cu cermet mixture.

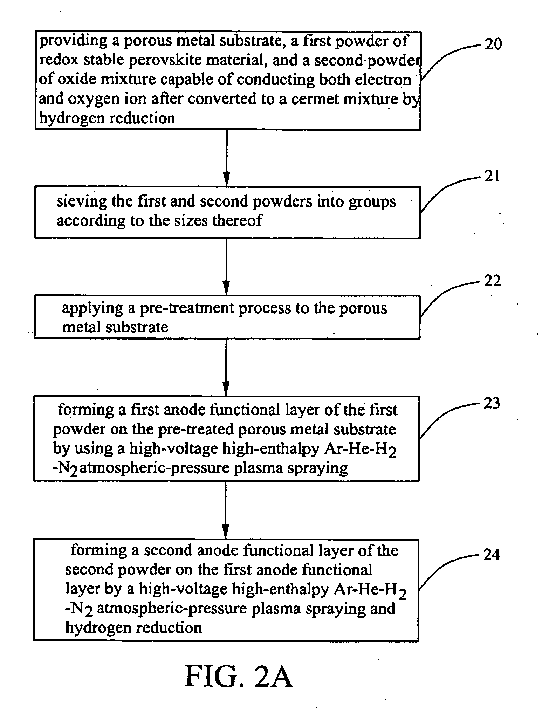

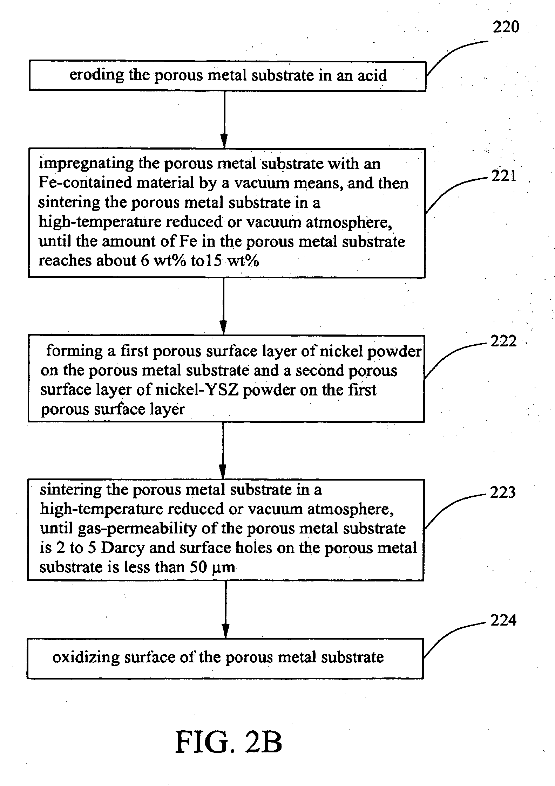

Referring to FIG. 2A, a flowchart of fabricating a redox-stable anode on a pretreated porous metal supporting substrate for a SOFC is schematically shown according to another embodiment of the present disclosure. In Step 20, a porous metal substrate, a first powder of redox stable perovskite material, and a second powder of oxide mixture converting to a cermet material after hydrogen reduction are provided. The porous metal substrate is mainly composed of Ni and has a thickness of from 1.05 mm to 1.25 mm. The perovskite is mainly capable of conducting electrons and the cermet materials are capable of conducting both electrons and oxygen ions. Then in Step 21, the first and second powders, for example, LSCM and nanostructured LDC-NiO powders, respectively, either in agglomerated form or sintered and crushed form, are sieved into groups of 10-20 µm, 20-40 µm, and 40-70 µm, according to their particle sizes. Then in Step 22, a pre-treatment process is applied to the porous metal substrate to provide a high gas-permeable porous metal substrate with enhanced strength for supporting a SOFC. After Step 22 that involves detailed steps as shown in FIG. 2B and hydrogen reduction, the porous metal substrate have porous shells containing fine Fe and Ni particles on the particle surfaces of the porous metal substrate. The hydrogen reduction can also occur in the normal operation of a SOFC. The porous shells are capable of absorbing the leakage oxygen by oxidation. Then in Step 23, a first anode functional layer is formed of the first powder (LSCM in this example) on the prepared porous substrate by using a high-voltage high-enthalpy Ar-He-H₂-N₂ atmospheric-pressure plasma spraying process. Then in Step 24, a second anode functional layer of the second powder (nano LDC-NiO in the example) on the first anode functional layer by a high-voltage high-enthalpy Ar-He-H₂-N₂ atmospheric-pressure plasma spraying process. After hydrogen reduction, this LDC-NiO layer changes to be the LDC-Ni layer named as the second anode functional layer. The powders used in the high-voltage high-enthalpy Ar-He-H₂-N₂ atmospheric-pressure plasma spraying process can be selected from one of the three groups mentioned in the Step 21. The high-voltage high-enthalpy Ar-He-H₂-N₂ atmospheric-pressure plasma spraying technique is characterized by high voltage and medium current, which are advantageous to reduce the erosion rate of electrodes of a plasma spray gun, so as to increase the lifetime of the plasma spray gun and the efficiency of being heated for the powder due to longer arc length.

With regard to the pre-treatment process in Step 22, FIG. 2B shows a flowchart of this process in the embodiment. In Step 220, the porous metal substrate containing nickel is eroded in 5% HNO₃ so that its weight is decreased by 10 %. Then in Step 221, the eroded porous nickel metal substrate is impregnated with a Fe-contained material such as Fe (NO₃)₃·9H₂O in water or Fe₃O₄ particles less than 2 µm in ethanol by using a vacuum means, then the impregnated porous nickel metal plate is sintered in a high-temperature (1150°C to 1350°C) reduced or vacuum atmosphere. Repeating the foregoing step 221 till the Fe content in the porous metal plate reaches about 6 wt% to 15 wt%. After high-temperature (1150°C to 1350°C reduced or vacuum atmosphere sintering process, the added Fe interacts with nickel to form a Ni-Fe alloy. Then in Step 222, a first and a second porous surface films are formed on the porous metal plate by a powder-covering method or a screen printing method, the used powders for forming the first and second porous surface films 101 and 102 are respectively nickel and mixed Ni and YSZ (nickel-YSZ). The first porous surface film 101 has a thickness in the range of 10 to 40µm, the second porous surface film 102 has a thickness in the range of 30 to 60 µm and the YSZ powders in the second porous surface film 102 can be nano, or submicron or micron grade. The nickel content in the second porous surface film 102 is from 40 wt% and 60 wt%. Then in Step 223, the applied powders or slurries containing powders on the porous metal substrate are then sintered in a high-temperature (1250°C to 1400°C) reduced or vacuum atmosphere to form a prepared porous substrate for supporting a SOFC. To erode the prepared porous substrate till the gas permeability of this porous substrate is 1.974 x 10⁻¹² to 4.935 x 10⁻¹² m² (2 to 5 Darcy), but the size of the surface holes on the first porous surface film 101 is less than 50 µm. The thickness of the first porous surface film 101 is in a range of 10 to 40 µm and the thickness of the second porous surface film 102 is in a range of 30 to 60 µm Then in Step 224, the prepared porous substrate after finishing Step 223 are oxidized in a furnace at a temperature of 600° C to 800° C for 1 to 2 hours to reduce the sizes of surface pores further to less than 30 µm. After the pre-treatment as shown in FIG. 2B, the prepared porous substrate has a thickness less than 1.35 mm.

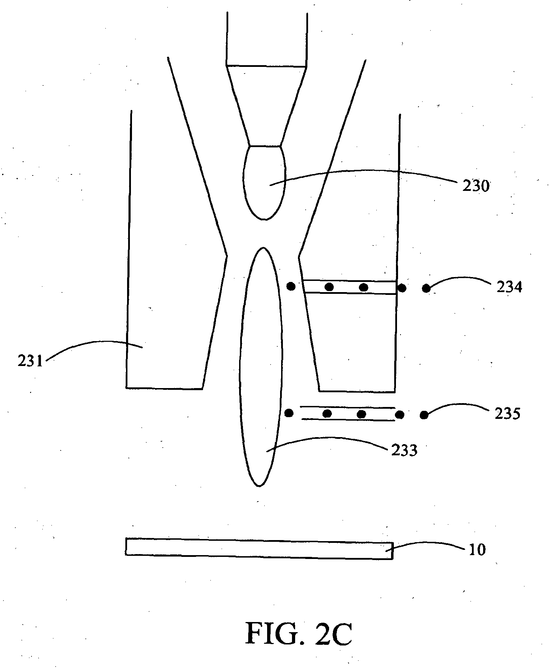

The foregoing high-voltage high-enthalpy Ar-He-H₂-N₂ atmospheric-pressure plasma spraying can be schematically illustrated in FIG. 2C. Ar, He, H₂ and N₂ gases are homogeneously mixed to facilitate the generation of high voltage high-enthalpy atmospheric-pressure plasma, wherein the flow rates of Ar, He, H₂ and N₂ are usually 49-56 slpm, 23-27 slpm, 2-8 slpm and 5-10 slpm, respectively. The flow rate of each gas is controlled by the individual mass flow meter. The average operating voltage in plasma spraying is about 100 to 112 V with a variation within 1 V and the torch current is in the range of 330 to 400 A.

Firstly, the Ar gas is introduced into the space between the cathode 230 and anode 231 of the plasma spray gun, where a starter is used to excite an electric arc and generate Ar plasma. Then the gas flows 232 of Ar, He, H₂ and N₂ gases are introduced therein and raised to needed levels to generate a high-temperature plasma jet 233. Depending on the ability of the sprayed material to resist hydrogen reduction, the ratio of H₂ to N₂ is adjusted to get the right phase of plasma sprayed layer and to minimize the impurity phase in the plasma sprayed layer. One of the grouped powders of LSCM or nanostructured LDC-NiO in the Step 21 is injected in the high-temperature plasma jet 233 internally 234 or externally 235. The high-temperature plasma jet 233 heats and accelerates the LSCM or nanostructured LDC-NiO powders with or without carbon pore former to strike the pre-heated prepared porous substrate at a temperature of about 450° C to 700° C and form the first 11 and the second 12 porous anode functional layers thereon. The content of carbon pore former is less than 15 wt%.

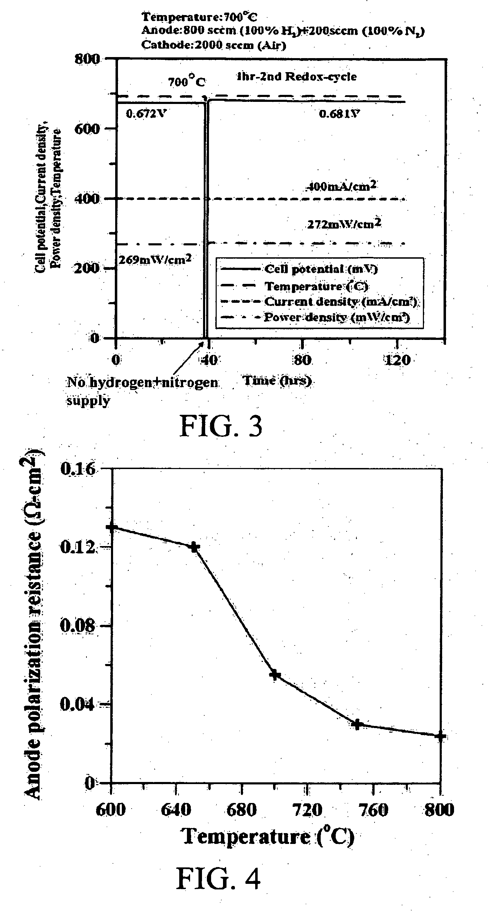

FIG. 3 illustrates the redox stability of this double-layer anode LSCM/LDC-Ni on the pretreated porous Ni-Fe substrate. The SOFC cell based on the invented anode has the Ni-Fe/LSCM/LDC-Ni/LDC/LSGM/LSGM-LSCF/LSCF material structure. Ni and Fe are mainly used to form a prepared porous substrat, LSCM and nanostructured LDC-Ni anode functional layers are coated on the prepared porous substrate, LDC and LSGM are used as an interlayer and an electrolyte layer, and LSCF is used as cathode. At the time about 40 hr as shown in FIG. 3, the hydrogen and nitrogen gases are stopped supplying for about two hours, during this time interval the air can flow into the SOFC anode freely. Because of no supplied fuel gas in the anode, the voltage of the tested cell drops to zero. After supplying the hydrogen and nitrogen gases again, the cell voltage rises and appears to be stable at 0.681V which is larger than 0.672V before stopping supplying the hydrogen and nitrogen gases. This shows the invented double-layer anode has the redox stability. FIG. 4 shows the measured polarization impedances versus temperatures from 600 to 800°C by AC impedance spectroscopy, the measured polarization resistances of the double-layer anode in this temperature range varies from 0.025 Ω cm² (800°C) to 0,13 Ω cm² (600°C) that are smaller than the values of previously disclosed redox stable anodes.

## Claims

1. A method for fabricating an anode on a pre-treated porous metal substrate (10) the method comprising the steps of:
providing (20) a porous metal substrate (10, 103), wherein the porous metal substrate (10,103) is mainly composed of Ni, a first powder of redox stable perovskite material, and a second powder of oxide mixture capable of conducting both electron and oxygen ion after converted to a cermet mixture by hydrogen reduction;
sieving (21) the first and second powders into groups according to the sizes thereof;
applying (22) a pre-treatment process to the porous metal substrate (10, 103), , wherein the pre-treatment process further includes:
(a) eroding (220) the porous metal substrate (10, 103) in an acid;
(b) impregnating (221) the porous metal substrate (10, 103) with an Fe-contained material by a vacuum means, and then sintering the porous metal substrate (10, 103) in a 1150∼1350°C hydrogen reduced or vacuum atmosphere, wherein the amount of Fe in the porous metal substrate (10, 103) is 6 ∼ 15 wt%;
(c) forming (222) a first porous surface film (101) of nickel powder on the porous metal substrate (10, 103) and a second porous surface film (102) of nickel-YSZ powder on the first porous surface film (101); and sintering (223) the porous metal substrate (10) in a 1250∼1400°C reduced or vacuum atmosphere,
(d) repeat (a) until gas-permeability of the porous metal substrate (10) is 1.974 x 10⁻¹² to 4.935 x 10⁻¹² m² (2 to 5 Darcy) and the size of the surface holes on the porous metal substrate (10) is less than 50 µm; and
(e) oxidizing (224) surface of the porous metal substrate (10); wherein after the pre-treatment process comprising steps (a) to (e) and hydrogen reduction, the pre-treated porous metal substrate (10) has constituent powder particles containing porous shells of fine Fe and Ni particles on the surfaces of the constituent powder particles of the porous metal substrate (10);
forming (23) a first anode functional layer (11) of the first powder on the pretreated porous metal substrate (10) by using a high-voltage high-enthalpy Ar-He-H₂-N₂ atmospheric-pressure plasma spraying; and
forming (24) a second anode functional layer (12) of the second powder on the first anode functional layer (11) by a high-voltage high-enthalpy Ar-He-H₂-N₂ atmospheric-pressure plasma spraying and hydrogen reduction.

2. The method of claim 1, wherein the high-voltage high-enthalpy Ar-He-H₂-N₂ atmospheric-pressure plasma spraying process involves Ar, He, H₂ and N₂ gases with adjustable composition percentages of Ar, He, H₂ and N₂ gases.

3. The method of claim 1, wherein the high-voltage high-enthalpy Ar-He-H₂-N₂ atmospheric-pressure plasma spraying process uses mass flow meters to control the flow rate of each gas and adjust composition percentages of Ar, He, H₂ and N₂ gases.

4. The method of claim 1, wherein the first and second powders are in the agglomerated form or in the sintered and crushed form.

5. The method of claim 1, wherein the groups comprise 10-20 µm, 20-40 µm, and 40-70 µm, according to particle sizes of the first and second powders.

6. The method of claim 1, wherein the acid comprises a diluted acid.

7. The method of claim 1, wherein the Fe-contained material is in a solution form or in a particle form of less than 2 µm immersed in ethanol.

8. The method of claim 1, wherein the first and second porous surface films (101, 102) are formed by powder-covering method or screen printing method, and the second porous surface film (102) has a thickness from 30 to 60 µm, the first porous surface film (101) has a thickness from 10 to 40 µm.

9. The method of claim 1, wherein oxidizing in step (e) is performed at a temperature between 600°C and 800°C for 1 to 2 hours to reduce the sizes of surface pores to less than 30 µm.

10. An anode of a solid oxide fuel cell (SOFC) fabricated according to the method of claim 1, the anode comprising:
a pre-treated porous metal substrate (10) with constituent powder particles containing porous shells of fine Fe and Ni particles on the surfaces of the constituent powder particles, wherein the pre-treated porous metal substrate (10) having an amount of Fe of 6 ∼15 wt%, the pre-treated porous metal substrate (10) further having a first porous surface film (101) of nickel powder on the porous metal substrate and a second porous surface film (102) of nickel-YSZ powder on the first porous surface film (101); wherein pre-treated porous metal substrate (10) is mainly composed of Ni, and the pre-treated porous metal substrate (10) has a gas-permeability of 1.974 x 10⁻¹² to 4.935 x 10⁻¹² m² (2 to 5 Darcy) and the size of the surface holes on the porous metal substrate (10) is less than 50 µm;
a first porous redox-stable anode functional layer (11), formed on the porous metal substrate (10); and
a second nano-structured or submicron-structured anode functional layer (12), formed on the first porous anode functional layer (11).

11. The anode of claim 10, wherein the pre-treated porous metal substrate (10) composed mainly of nickel and iron has a thickness from 1.05 mm to 1.25 mm.

12. The anode of claim 10, wherein the first porous surface film (101) composed of nickel has a thickness in the range of 10 to 40µm and has surface holes having sizes of less than 50µm, and the second porous surface film (102) composed of nickel and YSZ has a thickness in the range of 30 to 60µm, and wherein the nickel content in the second porous surface film (102) is from 40 to 60 wt%.

13. The anode of claim 10, wherein the oxygen entering into the pre-treated porous metal substrate (10) is obstructed by the presence of the first redox-stable porous anode functional layer (11) in front of the second anode functional layer (12), and fine Fe and Ni particles of porous shells absorb oxygen by oxidation reaction.

14. The anode of claim 10, wherein the first porous anode functional layer (11) is composed of a redox-stable perovskite material selected from the group consisting of La_{0.75}Sr_{0.25}Cr_{0.5}Mn_{0.5}O₃, La_{0.75}Sr_{0.25}Cr_{0.6}Mn_{0.4}O₃, La_{0.75}Sr_{0.25}Cr_{0.4}Mn_{0.6}O₃, Sr_{0.86}Y_{0.08}TiO₃, and La_{0.33}Sr_{0.66}TiO₃.

15. The anode of claim 14, wherein the first porous anode functional layer (11) comprises a micron-scale structure composed of particles having a size from 400 nm to 10 µm, the micron-scale structure having a thickness from 10 µm to 30 µm, a pore size of less than 30 µm, and a porosity from 15% to 30%.

16. The anode of claim 10, wherein the second porous anode functional layer (12) is composed of a cermet composite material capable of conducting both electrons and oxygen ions.

17. The anode of claim 16, wherein the cermet composite material is selected from the group consisting of La-doped ceria (LDC)-Ni cermet mixture, LDC-Cu cermet mixture, Gd-doped ceria (GDC)-Ni cermet mixture, GDC-Cu cermet mixture, LDC-Ni-Cu cermet mixture, and GDC-Ni-Cu cermet mixture.

18. The anode of claim 16, wherein the second porous anode functional layer (12) comprising a nano-scale structure is composed of particles having a size of less than 100 nm, the nano-scale structure having a thickness from 10 µm to 30 µm, a pore size of less than 100 nm, and a porosity from 12% to 30% after hydrogen reduction.

## Patentansprüche

1. Verfahren zur Herstellung einer Anode auf einem vorbehandelten porösen Metallsubstrat (10), wobei das Verfahren als Schritte umfasst:
Bereitstellen (20) eines porösen Metallsubstrats (10, 103), wobei das poröse Metallsubstrat (10,103) hauptsächlich aus Ni besteht, eines ersten Pulvers aus einem redoxstabilen Perowskitmaterial und eines zweiten Pulvers aus einer Oxidmischung, welche nach der Umwandlung in ein Cermetgemisch durch Wasserstoffreduktion sowohl für Elektronen als auch für Sauerstoff-ionen leitfähig ist,
Sieben (21) des ersten und zweiten Pulvers in Fraktionen gemäß ihren Größen,
Durchführen (22) eines Vorbehandlungsprozesses für das poröse Metallsubstrat (10, 103), wobei der Vorbehandlungsprozesses ferner umfasst:
(a) Erodieren (220) des porösen Metallsubstrats (10, 103) in einer Saure,
(b) Imprägnieren (221) des porösen Metallsubstrats (10, 103) mit einem Fe-haltigen Material mittels einer Vakuummethode und anschließendes Sintern des porösen Metallsubstrats (10, 103) bei 1150-1350 °C in einer wasserstoff-reduzierten oder Vakuumatmosphäre, wobei der Anteil an Fe in dem porösen Metallsubstrat (10, 103) 6 ∼ 15 Gew.-% beträgt,
(c) Ausbilden (222) eines ersten porösen Oberflächenfilms (101) aus Nickelpulver auf dem porösen Metallsubstrat (10, 103) und eines zweiten porösen Oberflächenfilms (102) aus Nickel-YSZ-Pulver auf dem ersten porösen Oberflächenfilm (101) und Sintern (223) des porösen Metallsubstrats (10) bei 1250∼1400°C in einer reduzierten oder Vakuumatmosphäre,
(d) Wiederholen von (a) bis die Gaspermeabilität des porösen Metallsubstrats (10) 1,974 x 10⁻¹² bis 4,935 x 10⁻¹² m² (2 bis 5 Darcy) beträgt und die Größe der Oberflächenlöcher an dem porösen Metallsubstrat (10) kleiner als 50 µm ist, und
(e) Oxidieren (224) der Oberfläche des porösen Metallsubstrats (10), wobei das vorbehandelte poröse Metallsubstrat (10) nach dem Vorbehandlungsprozess mit den Schritten (a) bis (e) und einer Wasserstoffreduktion einzelne Pulverpartikel aufweist, wobei an den Oberflächen der einzelnen Pulverpartikel des porösen Metallsubstrats (10) poröse Hüllen aus feinen Fe- und Ni-Partikeln ausgebildet sind,
Ausbilden (23) einer ersten Anodenfunktionsschicht (11) aus dem ersten Pulver auf dem vorbehandelten porösen Metallsubstrat (10) unter Einsatz eines Hochapannungs-Hochenthalpie-Ar-He-H₂-N₂-Atmosphärendruck-Plasmaspritzverfahrens, und
Ausbilden (24) einer zweiten Anodenfunktionsschicht (12) aus dem zweiten Pulver auf der ersten Anodenfunktionsschicht (11) durch Hochspannungs-Hochenthalpie-Ar-He-H₂-N₂-Atmosphärendruck-Plasmaspritzen und Wasserstoffreduktion.

2. Verfahren nach Anspruch 1, bei welchem bei dem Hochspannungs-Hochenthalpie-Ar-He-H₂-N₂-Atmosphärendruck-Plasmaspritzverfahren Ar-, He-, H₂- und N₂- Gas mit einstellbaren Prozentanteilen an Ar-, He-, H₂- und N₂- Gas in der Zusammensetzung beteiligt sind.

3. Verfahren nach Anspruch 1, wobei für das Hochspannungs-Hochenthalpie-Ar-He-H₂-N₂-Atmosphärendruck-Plasmaspritzverfahren Massendurchflussmesser verwendet werden, um die Durchflussrate von jedem Gas zu kontrollieren und die Prozentanteile an Ar-, He-, H₂- und N₂- Gas in der Zusammensetzung anzupassen.

4. Verfahren nach Anspruch 1, bei welchem das erste und zweite Pulver in einer agglomerierten Form oder in einer gesinterten und zerkleinerten Form vorliegen.

5. Verfahren nach Anspruch 1, bei welchem die den Partikelgröße des ersten und zweiten Pulvers entsprechenden Fraktionen 10-20 µm, 20-40 µm und 40-70 µm umfassen.

6. Verfahren nach Anspruch 1, bei welchem die Säure eine verdünnte Säure umfasst.

7. Verfahren nach Anspruch 1, bei welchem das Fe-haltige Material in einer gelösten Form oder in Form von Partikeln, die kleiner als 2 µm sind, vorliegt, die in Ethanol getaucht sind.

8. Verfahren nach Anspruch 1, bei welchem der erste und der zweite poröse Oberflächenfilm (101, 102) durch ein Pulverbeschichtungsverfahren oder Siebdruckverfahren gebildet werden, wobei der zweite poröse Oberflächenfilm (102) eine Dicke von 30 bis 60 µm hat, wobei der erste poröse Oberflächenfilm (101) eine Dicke von 10 bis 40 µm hat.

9. Verfahren nach Anspruch 1, bei welchem das Oxidieren in Schritt (e) bei einer Temperatur zwischen 600°C und 800°C für 1 bis 2 Stunden durchgeführt wird, um die Größen der Oberflächenporen auf weniger als 30 µm zu reduzieren.

10. Anode einer Festoxid-Brennstoffzelle (solid oxide fuel cell, SOFC), die gemäß dem Verfahren nach Anspruch 1 hergestellt ist, wobei die Anode umfasst:
ein vorbehandeltes poröses Metallsubstrat (10) mit einzelnen Pulverpartikein, welche poröse Hüllen aus feinen Fe- und Ni-Partikeln an den Oberflächen der einzelnen Pulverpartikel umfassen, wobei das vorbehandelte poröse Metallsubstrat (10) einen Gehalt an Fe von 6 ∼15 Gew.-% aufweist, wobei das vorbehandelte poröse Metallsubstrat (10) außerdem einen ersten porösen Oberflächenfilm (101) aus Nickelpulver auf dem porösen Metallsubstrat und einen zweiten porösen Oberflächenfilm (102) aus Nickel-YSZ-Pulver auf dem ersten porösen Oberflächenfilm (101) umfasst, wobei das vorbehandelte poröse Metallsubstrat (10) hauptsächlich aus Ni besteht, und wobei das vorbehandelte poröse Metallsubstrat (10) eine Gaspermeabilität von 1,974 x 10⁻¹² bis 4,935 x 10⁻¹² m² (2 bis 5 Darcy) hat und die Größen der Oberflächenlöcher an dem porösen Metallsubstrat (10) kleiner als 50 µm sind,
eine erste poröse redoxstabile Anodenfunktionsschicht (11), die auf dem porösen Metallsubstrat (10) gebildet ist, und
eine zweite nanostrukturierte oder submikronstrukurierte Anodenfunktionsschicht (12), die auf der ersten porösen Anodenfunktionsschicht (11) gebildet ist.

11. Anode nach Anspruch 10, bei welcher das vorbehandelte poröse Metallsubstrat (10), das hauptsächlich aus Nickel und Eisen besteht, eine Dicke von 1,05 mm bis 1,25 mm hat.

12. Anode nach Anspruch 10, bei welcher der erste poröse Oberflächenfilm (101), welcher aus Nickel besteht, eine Dicke im Bereich von 10 bis 40 µm hat und Oberflächenlöcher aufweist, die Größen haben, die kleiner als 50 µm sind, und wobei der zweite poröse Oberflächenfilm (102), der aus Nickel und YSZ gebildet ist, eine Dicke im Bereich von 30 bis 60 µm hat, und wobei der Nickelgehalt in dem zweiten porösen Oberflächenfilm (102) zwischen 40 und 60 Gew.-% beträgt.

13. Anode nach Anspruch 10, bei welcher der in das vorbehandelte poröse Metallsubstrat (10) eindringende Sauerstoff durch die Anwesenheit der ersten redoxstabilen porösen Anodenfunktionsschicht (11) vor der zweiten Anodenfunktionsschicht (12) aufgehalten wird, wobei die feinen Fe- und Ni-Partikel der porösen Hüllen Sauerstoff durch eine Oxidationsreaktion absorbieren.

14. Anode nach Anspruch 10, bei welcher die erste poröse Anodenfunktionsschicht (11) aus einem redoxstabilen Perowskitmaterial besteht, das ausgewählt ist aus einer Gruppe, die La_{0.75}Sr_{0.26}Cr_{0.5}Mn_{0.5}O₃, La_{0.75}Sr_{0.25}Cr_{0.6}Mn_{0.4}O₃, La_{0.75}Sr_{0.25}Cr_{0.4}Mn_{0.6}O₃, Sr_{0.8}Y_{0.08}TiO₃ und La_{0.33}Sr_{0.66}TiO₃ umfasst.

15. Anode nach Anspruch 14, bei welcher die erste poröse Anodenfunktionsschicht (11) eine mikrometerskalierte Struktur umfasst, die sich aus Partikeln zusammensetzt, die eine Größe von 400 nm bis 10 µm haben, wobei die mikrometerskalierte Struktur eine Dicke von 10 µm bis 30 µm, eine Porengröße, die kleiner als 30 µm ist, und eine Porosität zwischen 15% und 30% aufweist.

16. Anode nach Anspruch 10, bei welcher die zweite poröse Anodenfunktionsschicht (12) aus einem Cermet-Verbundmaterial besteht, das sowohl Elektronen als auch Sauerstoffionen leiten kann.

17. Anode nach Anspruch 16, bei welcher das Cermet-Verbundmaterial aus einer Gruppe ausgewählt ist, die ein La-dotiertes Ceroxid (LDC)-Ni-Cermetgemisch, ein LDC-Cu-Cermetgemisch, ein Gd-dotiertes Ceroxid (GDC)-Ni-Cermetgemisch, ein GDC-Cu Cermetgemisch, ein LDC-Ni-Cu Cermetgemisch und ein GDC-Ni-Cu Cermetgemisch umfasst.

18. Anode nach Anspruch 16, bei welcher die zweite poröse Anodenfunktionsschicht (12), die eine nanoskalierte Struktur umfasst, sich aus Partikeln zusammensetzt, die eine Größe kleiner als 100 nm haben, wobei die nanoskalierte Struktur eine Dicke von 10 µm bis 30 µm, eine Porengröße, die kleiner als 100 nm, ist, und eine Porosität zwischen 12% und 30% nach der Wasserstoffreduktion aufweist.

## Revendications

1. Procédé pour fabriquer une anode sur un substrat métallique poreux prétraité (10), le procédé comprenant les étapes de :
fourniture (20) d'un substrat métallique poreux (10, 103), le substrat métallique poreux (10, 103) étant principalement composé de Ni, d'une première poudre de matériau pérovskite résistant à l'oxydoréduction et d'une seconde poudre de mélange d'oxyde apte à conduire à la fois les électrons et les ions oxygène après conversion en un mélange de cermet par réduction par l'hydrogène ;
tamisage (21) de la première et de la seconde poudre dans des groupes selon les dimensions de celles-ci ;
application (22) d'un processus de prétraitement au substrat métallique poreux (10, 103), le processus de prétraitement comprenant de plus :
(a) érosion (220) du substrat métallique poreux (10, 103) dans un acide ;
(b) imprégnation (221) du substrat métallique poreux (10, 103) avec un matériau contenant du fer par des moyens permettant de créer un vide et ensuite frittage du substrat métallique poreux (10, 103) dans une atmosphère réduite à l'hydrogène à 1150∼1350°C ou une atmosphère sous vide, la quantité de Fe dans le substrat métallique poreux (10, 103) étant de 6 ∼ 15% en poids :
(c) formation (222) d'un premier film à surface poreuse (101) de poudre de nickel sur le substrat métallique poreux (10, 103) et d'un second film à surface poreuse (102) de poudre de nickel-YSZ sur le premier film à surface poreuse (101) et frittage (223) du substrat métallique poreux (10) dans une atmosphère réduite à l'hydrogène à 1250∼1400°C ou une atmosphère sous vide ;
(d) répétition de (a) jusqu'à ce que la perméabilité au gaz du substrat métallique poreux (10) soit de 1.974 x 10⁻¹² à 4.935 x 10⁻¹² m² (2 à 5 Darcy) et la dimension des trous de surface sur le substrat métallique poreux (10) soit inférieure à 50 µm et
(e) oxydation (224) de la surface du substrat métallique poreux (10) cependant qu'après le processus de prétraitement comprenant les étapes (a) à (e) et la réduction par l'hydrogène, le substrat métallique poreux prétraité (10) ait des particules de poudre constituante contenant des enveloppes poreuses des particules de FE et de Ni fines sur les surfaces des particules de poudre constituante du substrat métallique poreux (10) ;
formation (23) d'une première couche fonctionnelle d'anode (11) de la première poudre sur le substrat métallique poreux prétraité (10) en utilisant une projection de plasma à haute tension à haute enthalpie à pression atmosphérique Ar-He-H₂,N₂ et
formation (24) d'une seconde couche fonctionnelle d'anode (12) de la seconde poudre sur la première couche fonctionnelle d'anode (11) par une projection de plasma à haute tension à haute enthalpie à pression atmosphérique Ar-He-H₂,N₂ et réduction par l'hydrogène.

2. Procédé selon la revendication 1, le processus de projection de plasma à haute tension à haute enthalpie à pression atmosphérique Ar He-H₂,N₂ comportant des gaz Ar, He, H₂ et N₂ avec des pourcentages de composition ajustables des gaz Ar, He, H₂ et N₂.

3. Procédé selon la revendication 1, le processus de projection de plasma à haute tension à haute enthalpie à pression atmosphérique Ar-He-H₂,N₂ utilisant des débitmètres massiques pour contrôler le débit de chaque gaz et ajuster les pourcentages de composition des gaz Ar, He, H₂ et N₂.

4. Procédé selon la revendication 1, la première et la seconde poudre étant sous forme agglomérée ou sous forme frittée et broyée.

5. Procédé selon la revendication 1, les groupes comprenant 10 à 20 µm, 20 à 40 µm et 40 à 70 µm selon les dimensions des particules de la première et de la seconde poudre.

6. Procédé selon la revendication 1, l'acide comprenant un acide dilué.

7. Procédé selon la revendication 1, le matériau contenant du Fe étant sous forme de solution ou sous forme de particules de moins de 2 µm immergées dans de l'éthanol.

8. Procédé selon la revendication 1, le premier et le second film à surface poreuse (101, 102) étant formés par un procédé de recouvrement de poudre ou par un procédé de sérigraphie et le second film à surface poreuse (102) ayant une épaisseur de 30 à 60 µm, le premier film à surface poreuse (101) ayant une épaisseur de 10 à 40 µm.

9. Procédé selon la revendication 1, l'oxydation à l'étape (e) étant réalisée à une température entre 600°C et 800°C pendant 1 à 2 heures pour réduire les dimensions des pores de surface à moins de 30 µm.

10. Anode d'une pile à combustible à oxyde solide (SOFC) fabriquée selon le procédé de la revendication 1, l'anode comprenant :
un substrat métallique poreux prétraité (10) avec des particules de poudre constituante contenant des enveloppes poreuses des particules de FE et Ni fines sur les surfaces des particules de poudre constituante, le substrat métallique poreux prétraité (10) ayant une quantité de Fe de 6 ∼ 15% en poids, le substrat métallique poreux prétraité (10) ayant de plus un premier film à surface poreuse (101) de poudre de nickel sur le substrat métallique poreux et un second film à surface poreuse (102) de poudre de nickel-YSZ sur le premier film à surface poreuse (101), le substrat métallique poreux prétraité (10) étant composé principalement de Ni et le substrat métallique poreux prétraité (10) ayant une perméabilité au gaz de 1.974 x 10⁻¹² à 4.935 x 10⁻¹² m² (2 à 5 Darcy) et la dimension des trous de surface sur le substrat métallique poreux (10) étant inférieure à 50 µm ;
une première couche fonctionnelle d'anode, poreuse et résistante à l'oxydoréduction (11), formée sur le substrat métallique poreux (10) et
une seconde couche fonctionnelle d'anode nanostructurée ou de structure submicronique (12) formée sur la première couche frictionnelle poreuse d'anode (11).

11. Anode selon la revendication 10, le substrat métallique poreux prétraité (10) composé principalement de nickel et de fer ayant une épaisseur de 1,05 mm à 1,25 mm.

12. Anode selon la revendication 10, le premier film à surface poreuse (101) composé de nickel ayant une épaisseur de l'ordre de 10 à 40 µm et ayant des dimensions de trous de surface de moins de 50 µm et le second film à surface poreuse (102) composé de nickel et de YSZ ayant une épaisseur de l'ordre de 30 à 60 µm et la teneur en nickel dans le second film à surface poreuse (102) étant de 40 à 60 % en poids.

13. Anode selon la revendication 10, l'oxygène entrant dans le substrat métallique poreux prétraité (10) étant obstrué par la présence de la première couche fonctionnelle d'anode, poreuse et résistante à l'oxydation (11), devant la seconde couche fonctionnelle d'anode (12) et des particules de Fe fin et de Ni d'enveloppes poreuses absorbant l'oxygène par réaction d'oxydation.

14. Anode selon la revendication 10, la première couche fonctionnelle poreuse d'anode (11) étant composée d'un matériau de pérovskite résistant à l'oxydation sélectionné dans le groupe comprenant La_{0.75}Sr_{0.25}Cr_{0.5}Mn_{0.5}O₃, La_{0.75}Sr_{0.25}Cr_{0.6}Mn_{0.4}O₃, La_{0.75}Sr_{0.25}Cr_{0.4}Mn_{0.6}O₃, Sr_{0.86}Y_{0.08}TiO₃ et La_{0.33}Sr_{0.66}TiO₃.

15. Anode selon la revendication 14, la première couche fonctionnelle poreuse d'anode (11) comprenant une structure à l'échelle du micron composée de particules qui ont une taille entre 400 nm et 10 µm, la structure à l'échelle du micron ayant une épaisseur de 10 µm à 30 µm, une dimension de pores de moins de 30 µm et une porosité de 15% à 30%.

16. Anode selon la revendication 10, la seconde couche fonctionnelle poreuse d'anode (12) étant composée d'un matériau composite à base de cermet apte à conduire à la fois les électrons et les ions oxygène.

17. Anode selon la revendication 16, le matériau composite à base de cermet étant sélectionné dans le groupe consistant en un mélange de cermet Ni/cérine dopé au lanthane (LDC), un mélange de cermet Cu LDC, un mélange de cermet Ni/cérine dopé au gadolinium (GDC), un mélange de cermet Cu GDC et un mélange de cermet Ni-Cu LDC et un mélange de cermet Ni-Cu GDC.

18. Anode selon la revendication 16, la seconde couche fonctionnelle poreuse d'anode (12) comprenant une structure à l'échelle nanométrique étant composée de particules ayant une dimension de moins de 100 nm, la structure à l'échelle nanométrique ayant une épaisseur de 10 µm à 30 µm, une dimension de pores de moins de 100 nm et une porosité de 12% à 30% après réduction par l'hydrogène.
